# EUROPÄISCHE PATENTSCHRIFT

(11) **EP 2 313 022 B1**
(45) Veröffentlichungstag und Bekanntmachung des Hinweises auf die Patenterteilung: **11.03.2015**
(21) Anmeldenummer: 09775753.8
(22) Anmeldetag: 21.07.2009
(51) Int. Cl.: A61C 9/00, B65D 47/06, B65D 50/04, B65D 81/32, B65D 83/00, B05C 17/005

(54) **ANSCHLUSSSTÜCK FÜR AUSTRAGVORRICHTUNG**
CONNECTOR FOR A DISCHARGE DEVICE
RACCORD POUR DISPOSITIF DE DISTRIBUTION

(30) Priorität: 22.08.2008 CH 13392008
(43) Veröffentlichungstag der Anmeldung: 27.04.2011
(73) Patentinhaber: Medmix Systems AG, 6343 Rotkreuz (CH)
(72) Erfinder: GRETER, Andy, CH-6343 Rotkreuz (CH); KAYSER, Ralph Egon, CH-6004 Luzern (CH); KELLER, Wilhelm, A., CH-6402 Merlischachen (CH)
(74) Vertreter: Detken, Andreas
(86) Internationale Anmeldenummer: PCT/CH2009/000260
(87) Internationale Veröffentlichungsnummer: WO 2010/020061

(56) Entgegenhaltungen:
- WO-A-2007/109915
- WO-A-2007/131371
- DE-U1-202006 004 738
- US-A1- 2004 222 181
- US-B2- 7 316 330
- US-E1- R E38 399

## Beschreibung

Die vorliegende Erfindung betrifft ein Anschlussstück zum Anschliessen an eine Austragvorrichtung und eine Austragvorrichtung mit einem solchen Arischlussstück, insbesondere eine Austragvorrichtung mit wenigstens zwei Behältern zum Mischen von Komponenten.

### Stand der Technik

Aus dem Stand der Technik sind zahlreiche Spritzen, Doppelspritzen, Kartuschen oder Doppelkartuschen mit wenigstens einem Auslass bekannt, an die zum Austragen der Komponenten auf dem Auslass oder den Auslässen Zubehörteile angeschlossen werden. Derartige Zubehörteile sind zum Beispiel Mischer, Austragsspitzen, Spraydüsen, Breitschlitzdüsen, Entlüftungseinrichtungen oder Adapter für weitere Elemente der Austragvorrichtung. Die Zubehörteile werden in der Regel über den Auslässen der Austragvorrichtung durch eine Luer Lock Verbindung, einen Schraubverschluss oder einen Schnappverschluss angebracht. Auch ein Bajonett-Verschluss ist denkbar.

Aus der WO 2007/109915 ist zum Beispiel eine Austragvorrichtung mit einem abnehmbaren Zubehörteil in Form eines Mischers bekannt. Der Mischer ist durch eine Schnappverbindung auf den Auslässen der Auftragsvorrichtung aufgesetzt. Die Schnappverbindung umfasst Schnappnasen am Auslass und Schnappöffnungen an einer Gehäusehülse des Mischers. In aufgesetztem Zustand schnappen die Schnappnasen in die Schnappöffnungen ein und halten den Mischer auf der Austragvorrichtung. Die Schnappöffnungen sind dabei gegenüberliegend auf der Mischerhülse vorgesehen. Zum Lösen der Schnappverbindung wird die Mischerhülse an den beiden sich gegenüberliegenden Seiten der Hülse, die um 90° versetzt zu den Öffnungen angeordnet sind, zusammengedrückt. Dabei weitet sich die Mischerhülse in den Bereichen mit den Schnappöffnungen radial auf, so dass die Schnappnasen aus den Schnappöffnungen freigegeben werden. Der Mischer kann nun in axialer Richtung von der Austragvorrichtung abgezogen werden.

In der DE 20 2006 004 738 U1 ist eine Vorrichtung für das Mischen zweier Fluide gezeigt, bei der ein Mischaufsatz über den Auslässen zweier Spritzen aufgesetzt werden kann. Der Mischaufsatz wird durch eine Schnappverbindung auf den Auslässen gehalten. Hierfür sind an zwei sich gegenüberliegenden Seiten Schnappbalken vorgesehen, die nach Art einer Wippe an der Seite des Mischeraufsatzes angeordnet sind. Die Schnappbalken sind derart flexibel angeordnet, dass sie in einem Ausgangszustand hinter den Schnappvorsprung an den Spritzen greifen und den Mischaufsatz auf den Spritzen halten. Zum Lösen können die Balken an den Enden, welche den Schnapphaken gegenüberliegen, zusammengedrückt werden, so dass über die Wippfunktion die Schnapphaken von den Schnappvorsprüngen gelöst werden. Sobald die Schnapphaken gelöst sind, kann der Mischaufsatz axial von den Spritzen abgezogen werden. Ein ähnliches System ist in der US 7,316,330 B2 gezeigt, bei welcher flexible Schnapphaken an einem Zubehöraufsatz durch ein seitliches Zusammendrücken aus einer Schnappverbindung gelöst werden können und somit der Zubehöraufsatz axial von dem System abgezogen werden kann.

Bei den Zubehörelementen und Anschlussstücken für Austragvorrichtungen gemäss dem Stand der Technik erfolgt das Lösen des Zubehörteils in zwei Schritten. Zuerst muss durch seitliches Zusammendrücken des Zubehörteils eine Halteeinrichtung gelöst werden, die das Zubehörteil auf der Austragvorrichtung hält. Anschliessend muss eine axiale Kraft aufgewendet werden, um das Zubehörteil von der Austragvorrichtung abnehmen zu können. Die in axialer Richtung aufgewendete Kraft muss dabei die Haftkraft, die Reibungskraft und ein möglicherweise leichtes Verklemmen zwischen den Zubehörteilen und der Austragvorrichtung überwinden. Dies hat zur Folge, dass die Verbindung zwischen dem Zubehörteil und der Austragvorrichtung ruckartig gelöst wird. Ein solches ruckartiges Abziehen des Zubehörteils kann für einen Anwender ein Verletzungsrisiko mit sich bringen. Beispielsweise kann durch eine solche unkontrollierte ruckartige Bewegung eine Stichverletzung an einer Kanüle oder Nadel eines Zubehörteils erfolgen. Der Ruck beim Abziehen des Zubehörteils kann auch zur Aerosolbildung von kleinen Mengen der Komponenten ausserhalb der Austragvorrichtung führten, wodurch z. B. eine unerwünschte Kontamination des Arbeitsumfeldes entstehen kann.

Es ist daher eine Aufgabe der vorliegenden Erfindung, ein Anschlussstück zum Anschliessen an eine Austragvorrichtung zu schaffen, das in einfacher und ungefährlicher Weise von der Austragvorrichtung angenommen werden kann, bei dem sich das Abnehmen von der Austragvorrichtung nicht nachteilig auf die Komponenten in der, Austragvorrichtung auswirkt und bei der nur wenige Arbeitsschritte oder Handgriffe zum Abnehmen erforderlich sind.

Ferner ist es eine Aufgabe der vorliegenden Erfindung, eine Austragvorrichtung mit wenigstens zwei Behältern zu schaffen, bei der in einfacher Weise ein Anschlussstück aufgesetzt und abgenommen werden kann, ohne das Risiko einer Verletzung oder nachteiliger Wirkungen auf die Komponenten in den Behältern.

### Darstellung der Erfindung

Diese Aufgabe wird durch ein Anschlussstück nach Anspruch 1 und eine Austragvorrichtung nach Anspruch 10 gelöst. Vorteilhafte Ausgestaltungen des Anschlussstücks und der Austragvorrichtung gehen aus den Unteransprüchen hervor.

Gemäss der vorliegenden Erfindung wird eine Austragvorrichtung vorgesehen, die ein Behältergehäuse mit wenigstens einem Auslass an einem Ende und mit einem Antriebsmittel am gegenüberliegenden Ende umfasst. Das Behältergehäuse umfasst vorzugsweise wenigstens zwei Behälter, die in dem Gehäuse untergebracht sind oder gemeinsam das Behältergehäuse bilden. Die Behälter, bzw. das Behältergehäuse sind vorzugsweise als Mehrkomponenten-Kartuschen oder Mehrkomponenten -Spritzen, insbesondere als Doppelspritzen, ausgebildet. Die Behälter weisen jeweils Auslässe auf, die an dem Behältergehäuse nebeneinander angeordnet an einem Ende vorgesehen sind. An dem gegenüberliegenden Ende ist das Antriebsmittel zum Austragen der Komponenten durch die Auslässe der Behälter vorgesehen. Als Antriebsmittel kann zum Beispiel eine einfache manuell betätigte Antriebsstange dienen. Ein erfindungsgemässes Anschlussstück zum Anschliessen an die Austragvorrichtung ist über dem Auslass oder den Auslässen mit einer Halteeinrichtung lösbar angebracht. Die Halteeinrichtung ist durch einen manuellen Druck auf zwei gegenüberliegende Seitenflächen des Anschlussstücks lösbar.

Als Halteeinrichtung kann zum Beispiel ein lösbarer Verschluss dienen, der durch blosses axiales Aufschieben des Anschlussstücks auf die Auslässe oder das Behältergehäuse ohne eine Drehbewegung erfolgt, z. B. durch Formschluss. Grundsätzlich ist jedoch auch eine Halteeinrichtung mit Drehbewegung, wie zum Beispiel eine Bajonettverbindung, denkbar. Ferner kann die Halteeinrichtung auch durch blosses kraftschlüssiges Aufschieben des Anschlussstücks auf die Auslässe erfolgen, wobei das Halten des Anschlussstücks durch den Reibschluss der Bauteile erfolgt. Vorzugsweise ist die Halteeinrichtung durch eine Rastverbindung ausgebildet, bei welcher zwei Rastelemente lösbar mit einander verrasten.

Gemäss der vorliegenden Erfindung ist an den zwei gegenüberliegenden Seitenflächen des Anschlussstücks, die zum Lösen der Halteeinrichtung durch Aufbringen eines manuellen Drucks auf die Seitenflächen vorgesehen sind, jeweils eine Führungsfläche vorgesehen. Die beiden einander gegenüberliegend angeordneten Führungsflächen sind derart ausgerichtet, dass sie jeweils schräg zur Längsrichtung der Austragvorrichtung in Richtung der Austragvorrichtung abstehen. Die Führungsflächen können eine Breite aufweisen, die in etwa dem Durchmesser eines Behälters der Austragvorrichtung entspricht. Vorzugsweise sind die Führungsflächen als Führungskanten mit geringer Breite ausgebildet. Die Führungsflächen, bzw. -kanten, stehen somit erfindungsgemäss pfeilartig von dem Anschlussstück ab. Vorzugsweise schliessen die Flächen, bzw. Kanten, einen Winkel zwischen 30° und 90°, besonders bevorzugt von 45° ein.

In einer Halteposition ist das Anschlussstück auf der Austragvorrichtung über dem Auslass oder den Auslässen angebracht, beziehungsweise wird in der Halteposition von der Halteeinrichtung gehalten. Vorzugsweise ist das Anschlussstück in der Halteposition vollständig über den Auslässen vorgesehen. In einer Löseposition werden die Führungsflächen durch einen Druck auf die Seitenfläche radial aufeinander zu bewegt. Dabei gleiten die Führungsflächen an einer Kante der Austragvorrichtung, insbesondere des Behältergehäuses oder der Behälter ab, wobei die seitlich einwirkende Druckkraft auf die Kante der Austragvorrichtung umgelenkt wird und somit in axialer Richtung wirkt. Durch das Abgleiten der Führungsflächen ist das Anschlussstück in der Löseposition axial von der Austragvorrichtung weg verschoben. Die axiale Verschiebung des Anschlussstücks relativ zum Behältergehäuse, beziehungsweise den Behältern, erfolgt durch das Aufdrücken der schrägen Führungsflächen auf die Kanten, so dass durch das schräge Auftreffen der Führungsflächen auf die Kanten ein Kraftvektor in axialer Richtung erzeugt wird.

Das Anschlussstück kann dadurch in kontrollierter und geführter Weise von der Austragvorrichtung abgenommen werden. Ein ruckartiges Abziehen in axialer Richtung der Austragvorrichtung ist nicht oder nur in sehr geringem Masse notwendig. Dadurch kann das Abnehmen des Anschlussstücks von der Austragvorrichtung für einen Anwender deutlich vereinfacht und das dabei entstehende Verletzungsrisiko reduziert werden. Ferner besteht keine Gefahr einer Aerosol-Bildung, wie es bei einem ruckartigen Abziehen der Fall ist.

Das Anschlussstück umfasst vorzugsweise eine Hülse oder einen Mantel, die zum Aufsetzen auf die Auslässe über diese gestülpt werden können. Die Anschlussstückhülse weist an zwei sich gegenüberliegenden Seiten vom Aussenumfang abstehende Flanken auf, an welchen die Führungsflächen vorgesehen sind. Die Flanken können plattenartig in Längsrichtung entlang der Hülse angebracht sein. Wesentlich ist dabei, dass die Führungsflächen an den Flanken einer Kante an der Austragvorrichtung, beziehungsweise dem Behältergehäuse oder den Behältern, gegenüberliegt. Vorzugsweise sind die Flanken derart seitlich abstehend an der Anschlussstückhülse angeordnet, dass wenigstens die Führungsflächen über einen Rand der Anschlussstückhülse überstehen. Die Flanken weisen somit an ihren nach Innen zur Längsachse hin gerichteten Seiten die Führungsflächen auf. Die Führungsflächen stehen somit jeweils schräg zur Längsrichtung der Austragvorrichtung über den Rand der Anschlussstückhülse hinaus.

Die Anschlussstückhülse muss nicht ringartig ausgebildet sein. Die Hülse kann auch einen ovalen oder elliptischen Querschnitt aufweisen. In diesem Fall sind vorzugsweise die Führungsflächen an den sich entfernt gelegenen gegenüberliegenden Seiten vorgesehen und die Halteeinrichtung ist an den beiden sich näher liegenden gegenüberliegenden Seiten vorgesehen. Je nach Ausbildung oder Anordnung der Auslässe kann die Anschlussstückhülse in einer passenden Form ausgebildet sein, um die Auslässe in sich aufnehmen zu können. Vorzugsweise ist jedoch die Anschlussstückhülse als runde Hülse ausgebildet. Die Hülse kann auch konisch in Richtung der Austragsrichtung zulaufen. Vorzugsweise ist jedoch die Anschlussstückhülse zylindrisch vorgesehen.

An den Flanken der Anschlussstückhülse können Druckflächen, zum Beispiel in Form von Druckplättchen, zum Greifen des Anschlussstücks beim Lösen der Halteeinrichtung vorgesehen sein. Durch die senkrecht zum Umfang der Anschlussstückhülse verlaufenden Flanken sind die Druckflächen leicht vom Umfang der Hülse abgehoben und verlaufen im Wesentlichen parallel zur Umfangsfläche. Mit dieser Anordnung vergrössert sich der Abstand der seitlichen Andrückstellen an dem Anschlussstück, wodurch das Ergreifen und Zusammendrücken der Seitenflächen des Anschlussstücks erleichtert wird.

Bei einer vorteilhaften Ausgestaltung des Anschlussstücks liegt der Druckpunkt beim Aufbringen der Druckkraft auf die Seitenflächen des Anschlussstücks axial versetzt ausserhalb des Umfangs der Anschlussstückhülse. Dadurch kann sichergestellt werden, dass der Druckpunkt auf dem äussersten Rand der Anschlussstückhülse oder ausserhalb vorgesehen ist. Weiter ist es vorteilhaft, die an den Flanken vorgesehenen Druckflächen derart vorzusehen, dass sie über den Rand der Anschlussstückhülse hinaus stehen und sich in dieser Richtung leicht aufspreizen. Das Aufspreizen vergrössert wiederum den Abstand zwischen den Angriffspunkten beim Zusammendrücken der Anschlussstückhülse. Dadurch entsteht eine Art Hebelwirkung, die eine effiziente Übertragung der seitlich angreifenden Druckkraft auf die Führungsflächen an der Anschlussstückhülse und somit auf die Kante der Austragvorrichtung ermöglicht.

Bei einer vorteilhaften Ausgestaltung eines Anschlussstücks gemäss der vorliegenden Erfindung ist die Halteeinrichtung an sich gegenüberliegenden Seiten der Anschlussstückhülse zwischen der Anschlussstückhülse und dem Auslass oder den Auslässen vorgesehen. Die beiden sich gegenüberliegenden Seiten sind um 90° versetzt zu den Seitenflächen mit den Führungsflächen gemäss der vorliegenden Erfindung vorgesehen. Die Führungsflächen und die Halteeinrichtung sind somit über Kreuz angeordnet.

Die Halteeinrichtung kann durch eine lösbare Rastverbindung vorgesehen sein, die wenigstens einen Rastvorsprung und wenigstens eine Rastvertiefung aufweist, wovon eines an dem Anschlussstück und das andere an einem Auslass derart angeordnet ist, dass ein Rastvorsprung einer Rastvertiefung gegenüber zu liegen kommt. In einer Halteposition greift ein Rastvorsprung in eine Rastvertiefung ein und eine Bewegung des Anschlussstücks in axialer Richtung weg von der Austragvorrichtung ist blockiert. In der Löseposition sind die beiden sich gegenüberliegenden Seite der Anschlussstückhülsen, welche die Rasteinrichtung aufweisen, radial aufgeweitet und der Rastvorsprung ist aus der Rastvertiefung gelöst, beziehungsweise die Rastvorsprünge sind aus den Rastvertiefungen gelöst. Die Aufweitung erfolgt durch das manuelle zusammendrücken der zwei sich gegenüberliegenden Seitenflächen der Anschlussstückhülse. Durch das Zusammendrücken dieser beiden Seitenflächen werden die beiden um 90° versetzten Seiten der Anschlussstückhülse, die die Rastverbindung tragen, aufgeweitet.

Gleichzeitig mit dem Lösen der Rastverbindung gleitet auch die schräge Führungsfläche an der Kante der Austragvorrichtung, beziehungsweise des Behältergehäuses ab, und hebt das Anschlussstück in axialer Richtung von der Austragvorrichtung weg. Beim Lösen eines Anschlussstücks gemäss der vorliegenden Erfindung ist somit nur ein einziger Handgriff, nämlich das Zusammendrücken der Seitenflächen, notwendig, um sowohl die Halteeinrichtung zu lösen, als auch das Anschlussstück von der Austragvorrichtung abzunehmen.

An der Aussenseite des Anschlussstücks kann eine Vorrichtung zum Ausrichten des Anschlussstücks gegenüber der Austragvorrichtung vorgesehen sein. Hierfür kann zum Beispiel ein Steg oder eine Rille oder auch nur eine Linie an dem Anschlussstück dienen. Vorzugsweise ist die Einrichtung derart ausgebildet, dass das Anschlussstück nur in der ausgerichteten Stellung auf der Austragvorrichtung in der Halteposition angebracht werden kann. Dies kann z. B. durch die Ausgestaltung der Halteeinrichtung erfolgen, deren Elemente nur in einer bestimmten Position in einander greifen.

Es ist ein Vorteil der vorliegenden Erfindung, dass sowohl das Lösen der Halteeinrichtung als auch das Abziehen des Anschlussstücks von der Austragvorrichtung durch Einrichtungen an einem einzigen Bauteil, nämlich der Anschlussstückhülse mit den Führungsflächen und der Halteeinrichtung, vorgesehen sind. Die Anschlussstückhülse dient somit sowohl als Teil der Halteeinrichtung zum Halten des Anschlussstücks auf der Austragvorrichtung als auch zum Ablösen des Anschlussstücks von der Austragvorrichtung.

Nach einem weiteren Aspekt umfasst die Erfindung eine Austragvorrichtung mit einem Anschlussstück, wie es oben beschrieben ist. Vorzugsweise umschliesst das Anschlussstück in einer Haftposition die Auslässe flüssigkeitsdicht. Hierfür ist ein Haftsitz des Anschlussstücks über den Auslässen vorgesehen, der durch ein Einsatzelement im Inneren der Anschlussstückhülse erzielt wird, das auf dem Aussenumfang der Auslässe passgenau zu liegen kommt. Zum Lösen des Haftsitzes in der Löseposition des Anschlussstücks von der Austragvorrichtung werden wiederum die seitlichen Flächen des Anschlussstücks mit den Führungsflächen zusammengedrückt, so dass durch die Führung der Führungsflächen an den Kanten der Austragvorrichtung oder des Behältergehäuses die Haftkraft in kontrollierter Weise überwunden wird und der Haftsitz gelöst wird.

In einer Ausführungsform der vorliegenden Erfindung stehen die Druckflächen der Flanken des Anschlussstücks über das Behältergehäuse in axialer Richtung über, beziehungsweise die Druckflächen überlappen das Behältergehäuse wenigstens teilweise. Dadurch kann die Fläche der Druckflächen vergrössert werden und die Kraftausübung auf die Seitenflächen des Anschlussstücks wird erleichtert. Vorzugsweise ist das Anschlussstücks in der Halteposition derart über den Auslässen der Behälter angeordnet, dass die einzelnen Auslässe in einem in dem Anschlussstück vorgesehenen Kanal zusammengeführt werden. In dem Kanal kann dann ein Mischen der einzelnen Komponente aus den Behältern der Austragvorrichtung erfolgen.

In einer anderen Ausführungsform kann das Anschlussstück wenigstens einen Zugangskanal, vorzugsweise je einen Zugangskanal für jeden Auslass, aufweisen, der in der Halteposition des Anschlussstücks auf der Austragvorrichtung mit dem jeweiligen Auslass eine Fluidverbindung herstellt. Ein derart ausgebildetes Anschlussstück kann zur Befüllung der Behälter der Austragvorrichtung dienen.

Bei einer Austragvorrichtung mit einem Anschlussstück gemäss der vorliegenden Erfindung muss zum Abziehen des Anschlussstücks kein axialer Kraftaufwand erfolgen. Wie oben beschieben, reicht es aus, die beiden Seitenflächen des Anschlussstücks zusammenzudrücken. Durch die beiden schrägen Führungsflächen wird damit ein ruckfreies und kontrolliertes Entfernen des Anschlussstücks von der Austragvorrichtung ermöglicht. Durch die beiden Druckflächen, die seitlich an den Seitenflächen angeordnet sind, wird eine ergonomische Form des Anschlussstücks erzielt, welche das seitliche Zusammendrücken der Seitenflächen vereinfacht. Auch bei einer Verklebung oder einer Verschmutzung zwischen dem Anschlussstück und der Austragvorrichtung kann durch die erfindungsgemässen schrägen Führungsflächen ein einfaches Abnehmen des Anschlussstücks von der Austragvorrichtung durchgeführt werden.

### Kurze Beschreibung der Zeichnungen

Bevorzugte Ausführungsformen der Erfindung werden anhand der Zeichnung dargestellt, die in keiner Weise einschränkend auszulegen ist. Aus den Figuren der Zeichnung offenbar werdende Merkmale der Erfindung sollen als zur Offenbarung gehörend verstanden werden. In der Zeichnung stellen dar:
- Figur 1: Explosionsdarstellung einer Austragvorrichtung mit Anschlussstück;
- Figur 2a: eine schematische seitliche Darstellung eines Anschlussstücks und eines Teils einer Austragvorrichtung von einer ersten Seite;
- Figur 2b: eine Schnittdarstellung um 90° gedreht zu der Darstellung nach Figur 2a;
- Figur 3a: eine seitliche Darstellung einer Austragvorrichtung mit einem Anschlussstück in einer Halteposition;
- Figur 3b: eine Schnittdarstellung um 90° gedreht zur Figur 3a;
- Figur 4a: eine seitliche Darstellung einer Austragvorrichtung mit einem Anschlussstück bei seitlicher Krafteinwirkung;
- Figur 4b: eine Schnittdarstellung um 90° verdreht zur Figur 4a;
- Figur 5a: eine seitliche Darstellung einer Austragvorrichtung mit einem Anschlussstück in einer Löseposition;
- Figur 5b: eine Schnittdarstellung nach Figur 5a um 90° verdreht.

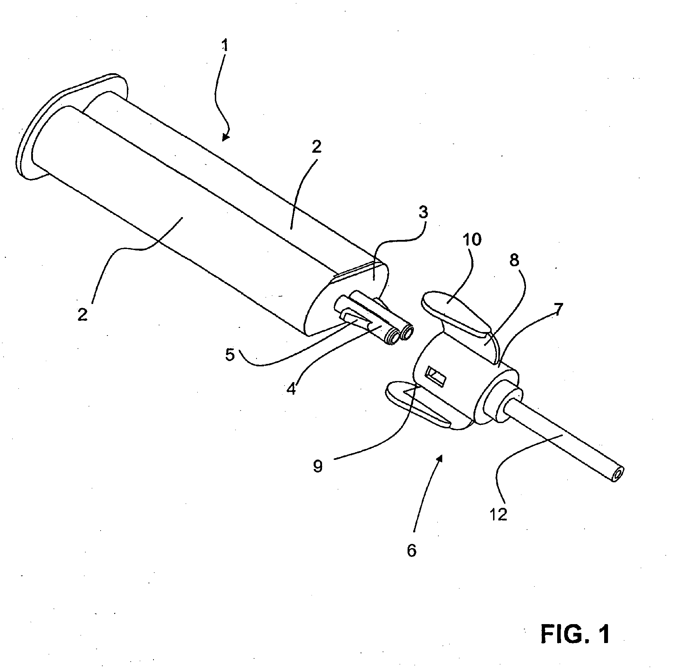

In Figur 1 ist eine Austragvorrichtung 1 mit zwei Behältern 2 gezeigt, wobei die beiden Behälter zu einem Behältergehäuse 3 zusammengefasst sind. An einem Ende des Behältergehäuses sind zwei Auslässe 4 vorgesehen, die rohrartig und parallel nebeneinander angeordnet sind. Die Auslässe weisen an ihrer voneinander abgewandten Seite je einen Rastvorsprung 5 auf. Die Austragvorrichtung ist zum Beispiel zum Mischen zweier Komponenten, die in jeweils einem der Behälter 2 untergebracht sind, geeignet Die Austragvorrichtung kann an dem Ende, das den Auslässen 2 gegenüberliegt, mit einem Antriebsmittel versehen sein, das zum Beispiel durch Einschieben in die Behälter die Komponente durch die Auslässe austrägt. Die Austragvorrichtung kann in diesem Sinne zum Beispiel als Doppelspritze ausgebildet sein.

Ein Anschlussstück 6 ist als Zubehörteil auf die Austragvorrichtung 1 aufsetzbar. In dem vorliegenden Ausführungsbeispiel wird das Zubehörteil durch eine aufsetzbare Austragsdüse gebildet. Das Anschlussstück weist eine Anschlussstückhülse 7 auf, die einen kreisrunden Durchschnitt aufweist. An zwei sich gegenüberliegenden Seiten der Hülse 7 ist jeweils eine Flanke 8 vorgesehen, die senkrecht von der Oberfläche der Hülse 7 absteht und an ihrem der Austragvorrichtung zugewandten Ende über den Rand der Hülse 8 hinaus steht. An dem überstehendem Teil der Flanke 8 ist jeweils eine Führungsfläche 9 angeordnet, die jeweils schräg zur Längsachse der Austragvorrichtung verläuft und in Richtung der Austragvorrichtung abstehend ausgerichtet ist.

Die Führungsflächen bilden vorzugsweise den gleichen Winkel zur Längsachse. Der Winkel beträgt vorzugsweise ca. 45°. An der Aussenkante der Flanke 8 sind Druckflächen 10 angeordnet, die in Umfangsrichtung nahezu parallel zum Umfang der Hülse 7 verlaufen und in Längsrichtung in Richtung der Austragvorrichtung leicht angehoben angeordnet sind. Die Druckflächen sind derart auf der Flanke 8 vorgesehen, dass ihre Flächen über die Führungsflächen 9 in Richtung der Austragvorrichtung überstehen.

An den beiden gegenüberliegenden Flächen der Anschlussstückhülse 7, die um ca. 90° zu den Druckflächen 10 versetzt sind, sind im Umfang Rastöffnungen 11 vorgesehen. Im dargestellten Beispiel erstrecken sich die Rastöffnungen 11 vollständig durch die Umfangswand der Hülse 7. Es ist jedoch auch denkbar, dass lediglich Rastvertiefungen in der Innenumfangsfläche der Hülse 7 an der Stelle der Öffnungen vorgesehen sind. Die Rastöffnungen 11 wirken beim Aufsetzten des Anschlussstücks 6 auf die Austragvorrichtung 1 mit den Rastvorsprüngen 5 zusammen.

Das Anschlussstück 6 weist an dem Ende, das der Austragvorrichtung 1 abgewandt ist, eine Austragsdüse 12 auf. Ist das Anschlussstück auf die Austragvorrichtung aufgesetzt, kann durch das Antriebsmittel der Inhalt der Behälter 2 durch die Auslässe 4 und die Austragshülse 12 ausgetragen werden.

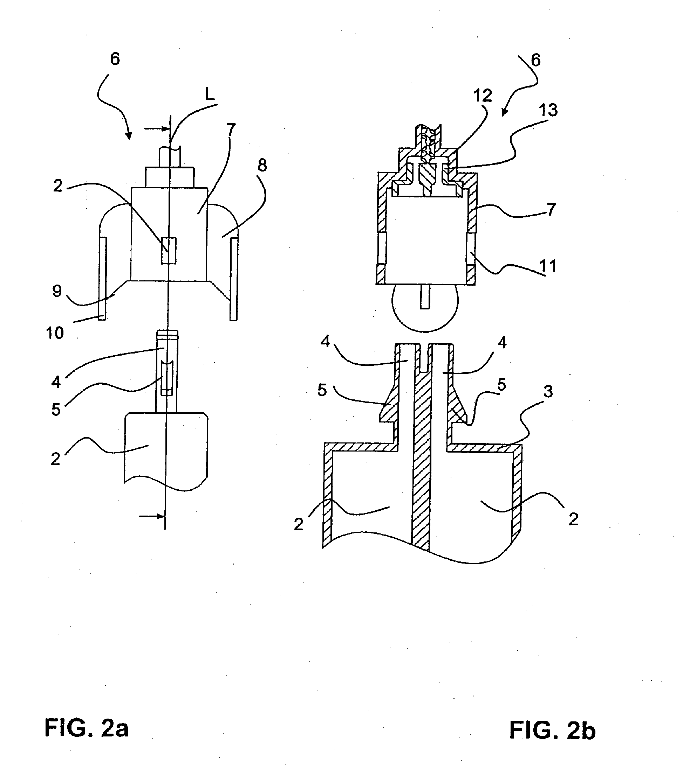

In Figur 2a ist eine schematische Darstellung des Anschlussstücks und eines Teils der Austragvorrichtung mit den Auslässen von einer ersten Seite gezeigt. In Figur 2b sind die gleichen Elemente als Schnittdarstellung in einer gegenüber der Figur 2a um 90° gedrehten Ansicht gezeigt. In Figur 2a ist das Anschlussstück 6 mit der Hülse 7 und einer Rastöffnung 11 sowie den an sich gegenüberliegenden Seiten befindlichen Flanken 8 mit den Führungsflächen 9 und den Druckflächen 10 zu sehen. Die Längsachse L verläuft entlang der Achse der Hülse 7. Die Führungsflächen 9 ragen pfeilartig von der Hülse 7 ab. Die Austragvorrichtung ist in Figur 2a derart von der Seite gezeigt, dass die beiden Auslässe 4 hintereinander zu liegen kommen. An der Vorderseite der Darstellung ist an der Seite eines Auslasses 4 ein Rastvorsprung 5 gezeigt. Der Auslass 4 schliesst sich an den Behälter 2 an.

In Figur 2b ist ein Schnitt durch das Behältergehäuse 3 ersichtlich, das die beiden Behälter 2 in stich aufnimmt, an welche sich die Auslässe 4 anschliessen. Jeweils auf der dem benachbarten Auslass abgewandten Seite eines Auslasses 4 sind diametral die Rastvorsprünge 5 zu sehen. Das Anschlussstück 6 ist von der Seite gezeigt, wie es auf die Austragvorrichtung 1 aufgesetzt wird.

In der Anschlussstückhülse 7 sind die Rastöffnungen 11 ersichtlich. Im Inneren der Hülse 7 ist ein Einsatzelement 13 angeordnet, dass die Enden der Auslässe 4 umschliessen kann, so dass vorzugsweise eine flüssigkeitsdichte Verbindung entsteht. Das Einsatzelement 13 weist pro Auslass einen Kanal auf, der zur Austragsdüse 12 führt.

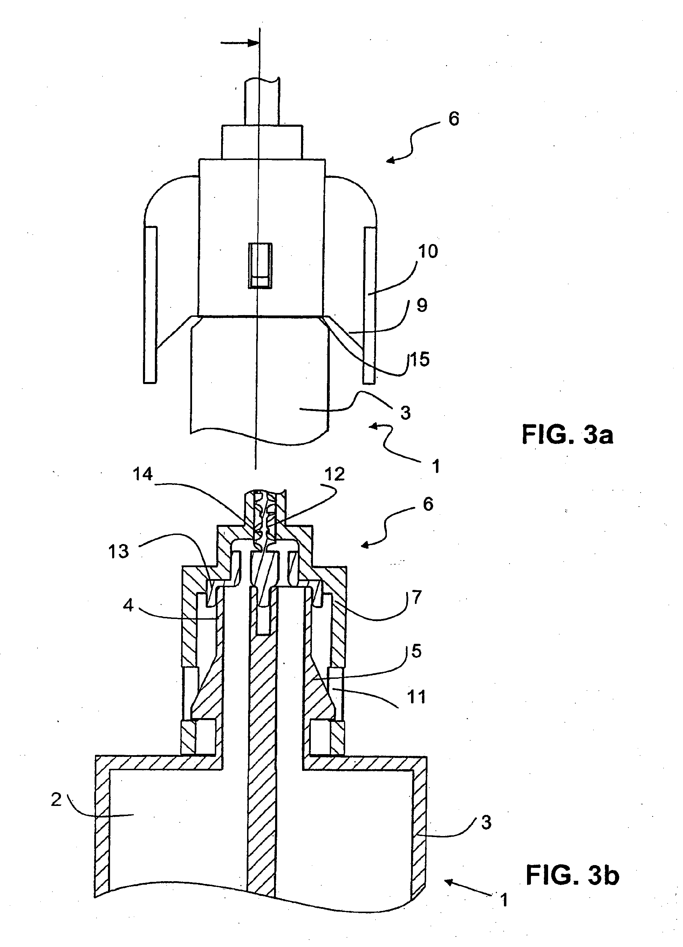

In den Figuren 3a und 3b ist das Anschlussstück 6 in einer Halteposition auf der Austragvorrichtung 1 aufgesetzt. Wie in Figur 3b ersichtlich ist, ragen in der Halteposition die Rastvorsprünge 5 in die Rastöffnungen 11 der Hülse 7 hinein, so dass die Kanten der Rastvorsprünge und der Rastöffnungen derart einander gegenüber liegen, dass sie eine Bewegung des Anschlussstücks 6 in axialer Richtung weg von der Austragvorrichtung 1 blockieren. In Figur 3b ist ersichtlich, wie das Ende der Auslässe 4 von den Einsatzelement 13 umschlossen wird. Dadurch ergibt sich eine durchgehende Fluidverbindung aus dem Inneren der Behälter 2 bis zur Austragsdüse 12. Im Inneren der Austragsdüse 12 ist eine Mischvorrichtung 14 angeordnet, die zum Mischen der aus den beiden Behältern 2 ausgetragenen Komponenten dient. Wie in Figur 3a ersichtlich, kommen die schrägen Führungsflächen 9 gegenüber den Kanten 15 des Behältergehäuses 3 zu liegen. Es wird keine Kraft auf die Druckflächen 10 ausgeübt, so dass das Anschlussstück 6 durch die Halteeinrichtung in Form der Rastverbindung auf der Austragvorrichtung 1 gehalten wird.

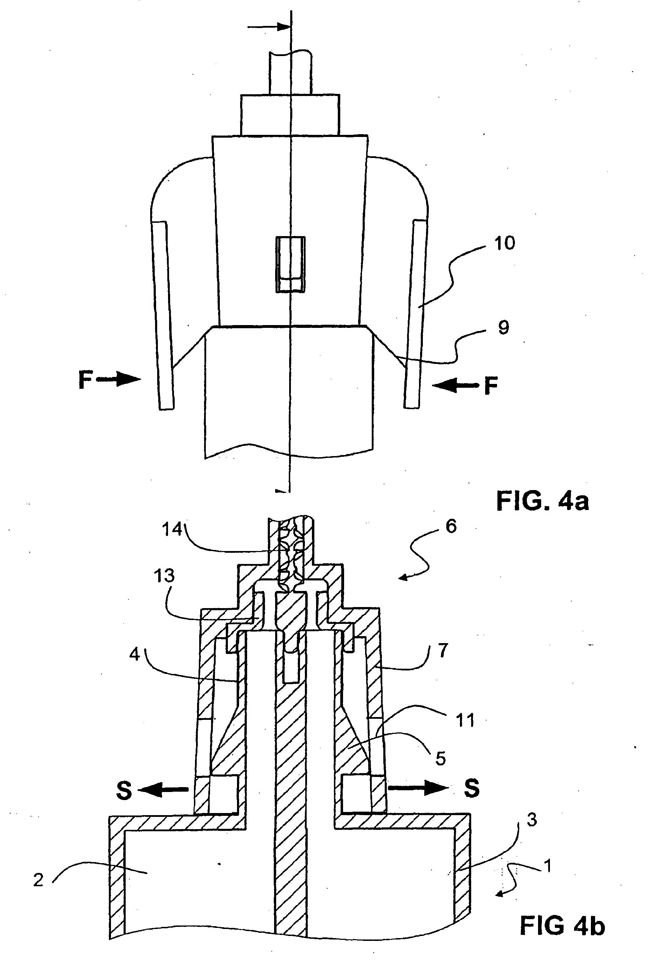

In den Figuren 4a und 4b ist das Anschlussstück 6 unter einer seitlichen Krafteinwirkung auf die Druckflächen 10 gezeigt. Hierfür wird das Anschlussstück 6 mit zwei Finger, einer auf jeder Seite, ergriffen und zusammengedrückt, wodurch eine Kraft in Richtung des Pfeils F in radialer Richtung zur Längsachse auf die Seitenflächen des Anschlussstücks ausgeübt wird. Dabei kommen die Führungsflächen 9 an den Kanten 15 zu liegen.

In Figur 4b ist ersichtlich, wie sich die beiden um 90° zu den Druckflächen 10 verdrehten seitlichen Flächen der Hülse 7 aufspreizen in Richtung der Pfeile S, sobald eine radial wirkende Kraft F auf die Druckflächen 10 ausgeübt wird. Dabei weiten sich diese Seiten der Hülse 7 radial nach aussen auf, so dass die Rastöffnungen 11 ausserhalb der Kanten der Rastvorsprünge 5 zu liegen kommen. In dieser Stellung erfolgt keine Blockierung des Anschlussstücks 6 in Richtung einer axialen Bewegung weg von der Austragvorrichtung 1.

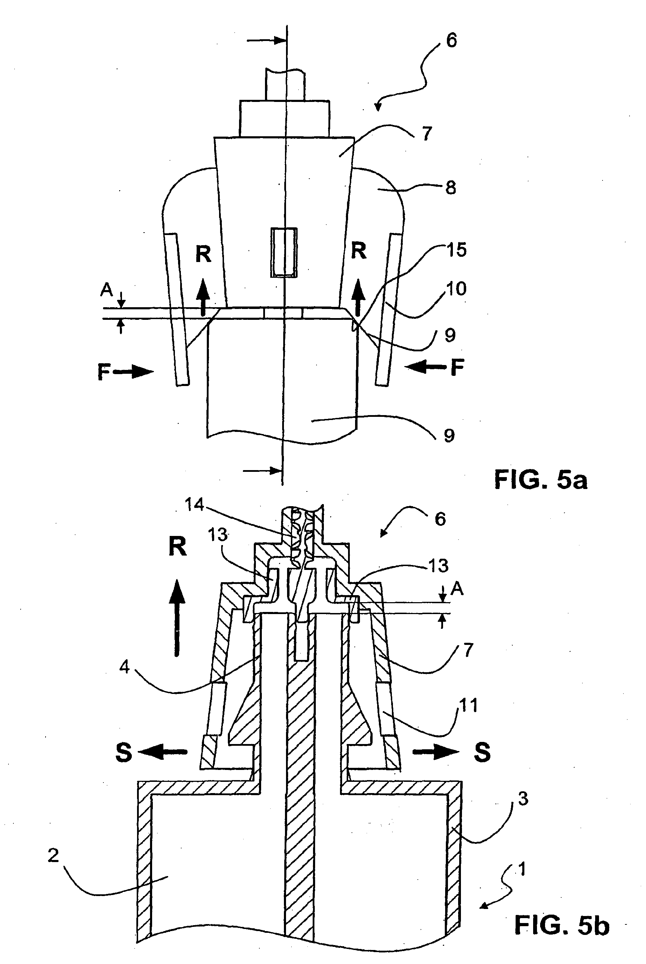

In den Figuren 5a und 5b ist das Anschlussstück 6 in einer Löseposition gezeigt. Dabei wurde weiterhin eine Druckkraft in Richtung der Pfeile F auf die Druckflächen 10 an der Anschlussstückhülse 7 ausgeübt. Wie in Figur 5a ersichtlich ist, werden dabei die schrägen Führungsflächen 9 entlang der Kanten 15 am Behältergehäuse 3 geführt. Dabei wird die in radialer Richtung senkrecht auf die Druckflächen 10 aufgebrachte Kraft F in eine Komponente in axialer Richtung gemäss dem Pfeil R umgelenkt. Die Führungsflächen 9 rutschen dabei an der Kante 15 ab und heben durch die Kraftkomponente R das Anschlussstück 6 in kontrollierter Weise von dem Behältergehäuse 3 ab. In Figur 5a ist das Anschlussstück 6 um den Abstand A von dem Behältergehäuse 3 abgehoben.

In Figur 5b ist ersichtlich, wie die zwischen den Führungsflächen 9 liegenden Flächen mit den Rastöffnungen 11 gelegenen Seiten der Anschlusshülse 7 in Richtung der Pfeile S aufgeweitet werden. Durch das Abgleiten der Führungsflächen 9 an den Kanten 15 und das damit verbundene Anheben des Anschlussstücks 6 von dem Behältergehäuse 3 wird auch das Einsatzelement 13 von dem Ende der Auslässe 4 um den Abstand A in axialer Richtung abgehoben. Der Haftsitz zwischen dem Einsatzelement 13 und den Auslässen 4 ist somit aufgehoben. Die Rastverbindung zwischen den Rostöffnungen 11 und den Rastvorsprüngen 5 ist ebenfalls aufgehoben, wie bereits in Figur 4b dargestellt wurde. Das Anschlussstück 6 kann in der gezeigten Löseposition ohne einen weiteren Kraftaufwand von dem Behältergehäuse 3 abgenommen werden. Es erfolgt kein ruckartiges Trennen des Anschlussstücks 6 von dem Behältergehäuse 3 der Austragvorrichtung 1, da jegliche Halteeinrichtungen oder Haftverbindungen bereits gelöst wurden, in dem das Anschlussstück 6 von dem Behältergehäuse 3 durch das Abgleiten der Führungsflächen 9 an den Kanten 15 in kontrollierter Weise in axialer Richtung abgehoben wurde.

### Bezugszeichenliste

- 1: Austragvorrichtung
- 2: Behälter
- 3: Behältergehäuse
- 4: Auslass
- 5: Rastvorsprung
- 6: Anschlussstück
- 7: Anschlussstückhülse
- 8: Flanke
- 9: Führungsfläche
- 10: Druckfläche
- 11: Rastöffnung
- 12: Austragsdüse
- 13: Einsatzelement
- 14: Mischvorrichtung
- 15: Kante

- L: Längsachse
- F: Kraft radial
- R: Kraft axial
- A: Abstand
- S: Richtung Aufweitung

## Patentansprüche

1. Anschlussstück zum Anschliessen an eine Austragvorrichtung, die ein Behältergehäuse (3) mit wenigstens einem Auslass (4) an einem Ende und mit einem Antriebsmittel am gegenüberliegenden Ende umfasst, wobei das Anschlussstück (6) über dem wenigstens einen Auslass (4) mit einer Halteeinrichtung lösbar anbringbar ist und die Halteeinrichtung durch einen manuellen Druck auf zwei gegenüberliegende Seitenflächen des Anschlussstücks lösbar ist,
**dadurch gekennzeichnet, dass**
an den zwei gegenüberliegenden Seitenflächen jeweils eine Führungsfläche (9) vorgesehen ist, die jeweils schräg zur Längsrichtung der Austragvorrichtung (1) in Richtung der Austragvorrichtung abstehend ausgerichtet sind, wobei
in einer Halteposition das Anschlussstück (6) auf der Austragvorrichtung (1) über dem Auslass (4) gehalten ist und
in einer Löseposition die Führungsflächen (9) durch einen Druck auf die Seitenflächen radial aufeinander zu bewegt sind, wobei die Führungsflächen (9) an einer Kante (15) der Austragvorrichtung (1) abgleiten und die Druckkraft (F) auf die Kante (15) umgelenkt ist, so dass das Anschlussstück (6) in der Löseposition axial von der Austragvorrichtung weg verschoben ist.

2. Anschlussstück nach Anspruch 1, **dadurch gekennzeichnet, dass** das Anschlussstück (6) eine Anschlussstückhülse (7) umfasst, die an zwei sich gegenüberliegenden Seiten vom Aussenumfang abstehende Flanken (8) aufweist, an welchen die Führungsflächen (9) vorgesehen sind.

3. Anschlussstück nach Anspruch 2, **dadurch gekennzeichnet, dass** die Flanken (8) über einen Rand der Anschlussstückhülse (7) überstehen und an ihren nach innen zur Längsachse gerichteten überstehenden Seiten die Führungsflächen (9) aufweisen.

4. Anschlussstück nach Anspruch 2 oder 3, **dadurch gekennzeichnet, dass** an den Flanken Druckflächen (10) zum Greifen des Anschlussstücks (6) vorgesehen sind.

5. Anschlussstück nach einem der vorhergehenden Ansprüche, **dadurch gekennzeichnet, dass** ein Druckpunkt beim Aufbringen der Druckkraft (F) auf die Seitenflächen (10) axial versetzt ausserhalb des Umfanges der Anschlussstückhülse (7) liegt.

6. Anschlussstück nach einem der vorhergehenden Ansprüche, **dadurch gekennzeichnet, dass** die Halteeinrichtung an sich gegenüberliegenden Seiten der Anschlussstückhülse (7) zwischen der Anschlussstückhülse (7) und dem Auslass (4) vorgesehen ist, wobei diese Seiten um 90° versetzt zu den Seitenflächen mit den Führungsflächen (9) sind.

7. Anschlussstück nach einem der vorhergehenden Ansprüche, **dadurch gekennzeichnet, dass** die Halteeinrichtung durch eine lösbare Rastverbindung vorgesehen ist, die wenigstens einen Rastvorsprung (5) und wenigstens eine Rastvertiefung (11) aufweist, die einander gegenüberliegend verteilt auf Anschlussstück und Auslass angeordnet sind.

8. Anschlussstück nach Anspruch 7, **dadurch gekennzeichnet, dass** in der Halteposition der Rastvorsprung (5) in die Rastvertiefung (11) eingreift und eine Bewegung des Anschlussstücks (6) in axialer Richtung weg von der Austragvorrichtung (1) blockiert und in der Löseposition die beiden Seiten der Anschlussstückhülse (7) mit der Rasteinrichtung radial aufgeweitet sind und der Rastvorsprung (5) aus der Rastvertiefung (11) gelöst ist.

9. Anschlussstück nach einem der vorhergehenden Ansprüche, **dadurch gekennzeichnet, dass** die Führungsflächen (9) und die Halteeinrichtung zumindest teilweise integriert an der Anschlusshülse (7) vorgesehen sind.

10. Austragvorrichtung mit wenigstens zwei Behältern mit jeweils einem Auslass, wobei die Behälter (2) in einem Behältergehäuse (3) untergebracht sind oder ein Behältergehäuse bilden und in den Behältern jeweils eine Komponente untergebracht ist, wobei die Auslässe (4) nebeneinander angeordnet an einem Ende des Behältergehäuses (3) vorgesehen sind und an dem gegenüberliegenden Ende ein Antriebsmittel zum Austragen der Komponenten durch die Auslässe vorgesehen ist, **dadurch gekennzeichnet, dass**
die Austragvorrichtung ein Anschlussstück nach einem der Ansprüche 1 bis 9 umfasst.

11. Austragvorrichtung nach Anspruch 10, **dadurch gekennzeichnet, dass** das Anschlussstück (6) in einer Halteposition die Auslässe (4) in einem Haftsitz flüssigkeitsdicht umschliesst und in der Löseposition der Haltesitz gelöst ist.

12. Austragvorrichtung nach Anspruch 10 oder 11, **dadurch gekennzeichnet, dass** die Druckflächen (10) der Flanken (8) des Anschlussstücks (6) über das Behältergehäuse (3) in axialer Richtung überstehen.

13. Austragvorrichtung nach einem der Ansprüche 10 bis 12, **dadurch gekennzeichnet, dass** das Anschlussstück (6) in der Halteposition die Auslässe (4) der Behälter (2) zu einem in dem Anschlussstück (6) vorgesehenen Kanal (12) zusammenführt.

14. Austragvorrichtung nach einem der Ansprüche 10 bis 13, **dadurch gekennzeichnet, dass** das Anschlussstück wenigstens einen Zugangskanal für jeden Auslass (4) aufweist, der in der Halteposition mit dem Auslass eine Fluidverbindung herstellt.

## Claims

1. A connector for connection to a discharge device, which comprises a container housing (3) with at least one outlet (4) at one end and with a drive means at the opposite end, the connector (6) being attachable releasably over the at least one outlet (4) by means of a holding arrangement, and the holding arrangement being releasable by means of manual pressure on two opposite side faces of the connector,
**characterized in that**
a guide face (9) is provided on each of the two opposite side faces, which guide faces in each case are oriented so as to project obliquely with respect to the longitudinal direction of the discharge device (1) in the direction of the latter,
the connector (6) being held on the discharge device (1) over the outlet (4) in a holding position, and
in a release position the guide faces (9) being moved radially toward one another by means of pressure on the side faces, the guide faces (9) sliding on an edge (15) of the discharge device (1), and the pressure force (F) being deflected to the edge (15) so that the connector (6) is displaced axially away from the discharge device in the release position.

2. The connector as claimed in claim 1, **characterized in that** the connector (6) comprises a connector sleeve (7) which has flanks (8) which project on two opposite sides from the outer circumference and on which the guide faces (9) are provided.

3. The connector as claimed in claim 2, **characterized in that** the flanks (8) project beyond a margin of the connector sleeve (7) and have the guide faces (9) on their projecting sides directed inward with respect to the longitudinal axis.

4. The connector as claimed in claim 2 or 3, **characterized in that** pressure faces (10) for grasping the connector (6) are provided on the flanks.

5. The connector as claimed in one of the preceding claims, **characterized in that** a pressure point for applying the pressure force (F) to the side faces (10) lies, offset axially, outside the circumference of the connector sleeve (7).

6. The connector as claimed in one of the preceding claims, **characterized in that** the holding arrangement is provided on opposite sides of the connector sleeve (7) between the connector sleeve (7) and the outlet (4), these sides being offset at 90° with respect to the side faces having the guide faces (9).

7. The connector as claimed in one of the preceding claims, **characterized in that** the holding arrangement is provided by a releasable latching connection which has at least one latching projection (5) and at least one latching depression (11) which are arranged so as to be distributed opposite one another on the connector and the outlet.

8. The connector as claimed in claim 7, **characterized in that**, in the holding position, the latching projection (5) engages into the latching depression (11) and blocks movement of the connector (6) in the axial direction away from the discharge device (1), and, in the release position, the two sides of the connector sleeve (7) are widened radially by means of the latching arrangement and the latching projection (5) is released from the latching depression (11).

9. The connector as claimed in one of the preceding claims, **characterized in that** the guide faces (9) of the holding arrangement are provided, at least partially integrated, on the connector sleeve (7).

10. A discharge device with at least two containers, each with an outlet, the containers (2) being accommodated in a container housing (3) or forming a container housing, and in each case a component being accommodated in the containers, the outlets (4) being provided, arranged next to one another, at one end of the container housing (3), and a drive means for discharging the components through the outlets being provided at the opposite end, **characterized in that** the discharge device comprises a connector as claimed in one of claims 1 to 9.

11. The discharge device as claimed in claim 10, **characterized in that**, in a holding position, the connector (6) surrounds the outlets (4) in a liquid-tight manner with a tight fit and, in the release position, the holding fit is released.

12. The discharge device as claimed in claim 10 or 11, **characterized in that** the pressure faces (10) of the flanks (8) of the connector (6) project in the axial direction beyond the container housing (3).

13. The connector as claimed in one of claims 10 to 12, **characterized in that**, in the holding position, the connector (6) converges the outlets (4) of the containers (2) into a canal (12) provided in the connector (6).

14. The discharge device as claimed in one of claims 10 to 13, **characterized in that** the connector has for each outlet (4) at least one access canal which, in the holding position, makes a fluid connection with the outlet.

## Revendications

1. Raccord destiné au raccordement d'un dispositif de distribution, qui comprend un logement de récipient (3) comprenant au moins une évacuation (4) à une extrémité et un moyen d'entraînement sur l'extrémité opposée, sachant que la pièce de raccordement (6) peut être placée sur l'au moins une évacuation (4) de façon séparable avec un dispositif de fixation et le dispositif de fixation peut être séparé par une pression manuelle sur deux faces latérales opposées du raccord,
**caractérisé en ce**
**qu'**une surface de guidage (9) respective est prévue sur les deux faces latérales opposées, lesquelles sont alignées respectivement de biais par rapport au sens longitudinal du dispositif de distribution (1) en saillie en direction du dispositif de distribution, sachant que
dans une position de fixation, le raccord (6) est maintenu sur le dispositif de distribution (1) par l'évacuation (4) et
dans une position de séparation, les surfaces de guidage (9) sont déplacées radialement l'une sur l'autre par une pression sur les faces latérales, sachant que les surfaces de guidage (9) glissent sur une arête (15) du dispositif de distribution (1) et la force de pression (F) sur l'arête (15) est déviée, de sorte que le raccord (6) est éloigné axialement du dispositif de distribution dans la position de séparation.

2. Raccord selon la revendication 1, **caractérisé en ce que** le raccord (6) comprend un manchon de raccord (7) qui présente des flancs (8) en saillie sur deux côtés opposés du pourtour extérieur, sur lesquels les surfaces de guidage (9) sont prévues.

3. Raccord selon la revendication 2, **caractérisé en ce que** les flancs (8) sont en saillie sur un bord du manchon de raccord (7) et présentent les surfaces de guidage (9) sur leurs côtés en saillie dirigés vers l'intérieur par rapport à l'axe longitudinal.

4. Raccord selon la revendication 2 ou 3, **caractérisé en ce que** des surfaces de pression (10) sont prévues sur les flancs pour saisir le raccord (6).

5. Raccord selon l'une des revendications précédentes, **caractérisé en ce qu'**un point de pression lors de l'application de la force de pression (F) sur les surfaces latérales (10) est décalé axialement hors du pourtour du manchon de raccord (7).

6. Raccord selon l'une des revendications précédentes, **caractérisé en ce que** le dispositif de fixation est prévu sur des côtés opposés du manchon de raccord (7) entre le manchon de raccord (7) et l'évacuation (4), sachant que ces côtés sont décalés de 90° par rapport aux surfaces latérales avec les surfaces de guidage (9).

7. Raccord selon l'une des revendications précédentes, **caractérisé en ce que** le dispositif de fixation est prévu par une liaison encliquetable séparable qui présente au moins une saillie d'encliquetage (5) et au moins un évidement d'encliquetage (11) qui sont disposés en étant répartis opposés l'un à l'autre sur le raccord et l'évacuation.

8. Raccord selon la revendication 7, **caractérisé en ce que** dans la position de fixation la saillie d'encliquetage (5) se met en prise dans l'évidement d'encliquetage (11) et bloque un mouvement du raccord (6) dans le sens axial, l'éloignant du dispositif de distribution (1), et dans la position de séparation, les deux côtés du manchon de raccord (7) sont évasés radialement avec le dispositif d'encliquetage et la saillie d'encliquetage (5) est séparée de l'évidement d'encliquetage (11).

9. Raccord selon l'une des revendications précédentes, **caractérisé en ce que** les surfaces de guidage (9) et le dispositif de fixation sont prévus au moins partiellement intégrés sur le manchon de raccord (7).

10. Dispositif de distribution comprenant au moins deux récipients ayant chacun une évacuation, sachant que les récipients (2) sont disposés dans un logement de récipient (3) ou forment un logement de récipient, et une composante respective est disposée dans les récipients, sachant que les évacuations (4) sont prévues disposées l'une à côté de l'autre sur une extrémité du logement de récipient (3) et un moyen d'entraînement pour distribuer les composantes à travers les évacuations est prévu sur l'extrémité opposée,
**caractérisé en ce que**
le dispositif de distribution comprend un raccord selon l'une des revendications 1 à 9.

11. Dispositif de distribution selon la revendication 10, **caractérisé en ce que** le raccord (6), dans une position de fixation, entoure les évacuations (4) en étanchéité aux liquides en un ajustement par adhérence et l'ajustement par adhérence/fixation est séparé dans la position de séparation.

12. Dispositif de distribution selon la revendication 10 ou 11, **caractérisé en ce que** les surfaces de pression (10) des flancs (8) du raccord (6) sont en saillie au-dessus du logement de récipient (3) dans le sens axial.

13. Dispositif de distribution selon l'une des revendications 10 à 12, **caractérisé en ce que** le raccord (6), dans la position de fixation, réunit les évacuations (4) des récipients (2) vers un canal (12) prévu dans le raccord (6).

14. Dispositif de distribution selon l'une des revendications 10 à 13, **caractérisé en ce que** le raccord présente au moins un canal d'accès pour chaque évacuation (4) qui crée une liaison fluidique avec l'évacuation dans la position de fixation.
